# FASCICULE DE BREVET EUROPEEN

(11) **EP 1 692 428 B1**
(45) Date de publication et mention de la délivrance du brevet: **03.12.2008**
(21) Numéro de dépôt: 04805577.6
(22) Date de dépôt: 29.11.2004
(51) Int. Cl.: F16L 59/135, F16L 3/10, G08B 17/04, B64D 33/00

(54) **DISPOSITIF DE RETENUE D' UN SYSTEME DE DETECTION DU FEU**
BEFESTIGUNGSVORRICHTUNG FÜR FEUERDETEKTIONSSYSTEM
SUPPORT DEVICE FOR FIRE-DETECTION SYSTEM

(30) Priorité: 11.12.2003 FR 0314509
(43) Date de publication de la demande: 23.08.2006
(73) Titulaire: AIRCELLE, 76700 Gonfreville l'Orcher (FR)
(72) Inventeur: GUILLOIS, Denis, F-91470 Limours (FR); LAMY, Yannick, F-92360 Meudon-la-Forêt (FR)
(74) Mandataire: Gaillarde, Frédéric F. Ch.
(86) Numéro de dépôt international: PCT/FR2004/003051
(87) Numéro de publication internationale: WO 2005/066536

(56) Documents cités:
- DE-A- 3 809 744
- DE-U- 8 601 443
- GB-A- 823 132
- GB-A- 2 080 676
- US-A- 3 458 163
- US-A- 4 119 285
- US-A- 4 268 947

## Description

La présente invention se rapporte à un dispositif de retenue prévu pour être installé entre un moteur d'aéronef et un inverseur de poussée associé, ce dispositif étant pourvu d'un moyen de retenue apte à supporter au moins un élément de détection feu réalisé sous la forme d'un capillaire.

Il est déjà connu d'utiliser des systèmes de détection feu afin de prendre connaissance au plus tôt d'un incendie touchant l'un des moteurs de l'aéronef. Dans tous les cas, chaque système de détection feu comprend, d'une part, un dispositif de retenue rendu solidaire d'une partie fixe, et d'autre part, au moins un élément de détection feu réalisé sous la forme d'un capillaire, ce dernier étant supporté par un moyen de retenue inclus dans le dispositif de retenue. Le dispositif de retenue varie d'un système de détection feu à un autre selon qu'il est prévu de le rattacher à une partie fixe du bloc moteur ou à une partie fixe de l'inverseur de poussée positionné autour du bloc moteur.

Lorsque le dispositif de retenue est fixé côté moteur, le moyen de retenue est constitué par un collier métallique pouvant résister à la température élevée régnant dans l'enceinte. Ce type de rattachement peut toutefois être considéré comme non satisfaisant car le capillaire peut être endommagé par les frottements du collier.

Lorsque le dispositif de retenue est fixé côté inverseur de poussée, le moyen de retenue peut, au choix, être constitué soit par un collier, soit par une bague en Téflon pourvue d'une fente de connexion. Toutefois, si le collier est en métal, un inconvénient supplémentaire réside dans le fait que la partie du collier venant au contact des éléments de détection constitue un pont thermique susceptible, d'une part, d'endommager la structure de l'inverseur de poussée, et d'autre part, d'induire lesdits éléments de détection en erreur. Par ailleurs, la bague en Téflon, qui ne peut pas être utilisée lorsque le système de détection est positionné côté moteur à cause de sa mauvaise tenue à la température, présente l'inconvénient de ne pas garantir le maintien de l'élément de détection en toute circonstance. En effet, il peut arriver que ce dernier soit accidentellement extrait de la fente de connexion dans lequel il était préalablement glissé.

On connaît par ailleurs du document US3,458,163, un dispositif de retenue d'éléments allongés tels que des câbles électriques, ce dispositif comprenant au moins deux organes de maintien semi-cylindriques pouvant être assemblés l'un à l'autre de façon amovible, présentant chacun une face plane pourvue d'au moins un sillon longitudinal dans lequel peut être inséré ledit capillaire de détection feu.

Bien que permettant un bon maintien d'organes allongés, sans frottement sur ces organes, le dispositif de retenue selon US 3,458,163 ne peut pas être utilisé pour l'application aéronautique particulière susmentionnée: en effet, dans ce dispositif de l'état de la technique, les deux organes de maintien semi-cylindriques sont maintenus assemblés au moyen de deux demi-corps vissés l'un sur l'autre.

Outre le fait que ces deux demi-corps présentent un poids non négligeable, ce qui est toujours un handicap dans le domaine de l'aéronautique, ils ne peuvent pas être aisément désolidarisés l'un de l'autre. Ainsi, pour mettre en place ou enlever les capillaires de détection de feu, il faut commencer par ôter les moyens de vissage reliant entre eux ces deux demi-corps, ce qui prend un certain temps. Ceci est d'autant plus pénalisant qu'une ligne de capillaires de détection de feu est maintenue par toute une série de dispositifs de retenue.

La présente invention a pour but de remédier aux inconvénients cités précédemment, et concerne pour cela un dispositif de retenue prévu pour être installé entre un moteur d'aéronef et un inverseur de poussée associé afin de supporter au moins un élément de détection feu réalisé sous la forme d'un capillaire, ce dispositif comprenant au moins deux organes de maintien semi-cylindriques pouvant être assemblés l'un à l'autre de façon amovible, présentant chacun une face plane pourvue d'au moins un sillon longitudinal dans lequel peut être inséré ledit capillaire de détection feu,
ce dispositif étant remarquable en ce qu'il comprend au moins deux coquilles métalliques pouvant être disposées autour desdits organes de maintien, et une pince ressort dans laquelle les organes de maintien entourés de leurs coquilles métalliques peuvent peut être engagés.

Grâce à ces caractéristiques, les deux organes de maintien semi-cylindriques peuvent être maintenus au contact l'un de l'autre grâce aux deux coquilles métalliques, et ces deux coquilles métalliques peuvent être maintenues en place grâce à la pince ressort.

La combinaison de ces coquilles métalliques et de cette pince ressort présente l'avantage d'assurer un excellent maintien des capillaires de détection de feu, tout en étant très facile à monter/démonter : pour le montage en effet, il suffit d'insérer en force, entre les branches de la pince ressort, l'ensemble formé par les deux organes de maintien enserrant les capillaires et entourés des deux demi-coquilles métalliques. Pour le démontage, il suffit de sortir cet ensemble de ces deux branches.

Ainsi, dans un dispositif de retenue selon l'invention, les organes de maintien peuvent enserrer chaque capillaire et en interdire toute extraction intempestive. De plus, en fonction de la localisation du système de détection feu, il est possible de choisir un matériau adapté pour réaliser le moyen de retenue. En effet, lorsqu'il est prévu d'installer le système de détection feu côté moteur, les organes de maintien sont réalisés en métal afin de résister à la température ambiante. En revanche, lorsqu'il est prévu d'installer un tel système de détection feu côté inverseur de poussée, les organes de maintien sont préférentiellement réalisés dans un matériau de densité peu élevée présentant une faible conductivité thermique afin d'éviter la création de ponts thermiques susceptibles, d'une part, d'endommager les éléments de l'inverseur de poussée réalisés en matériau composite, et d'autre part, d'induire les éléments de détection en erreur.

Les deux coquilles métalliques sont particulièrement avantageuses lorsque les organes de maintien sont réalisés dans un matériau à faible conductivité thermique susceptible de se détériorer lors d'un incendie. En effet, dans ce cas là, les deux coquilles métalliques forment un moule rigide à l'intérieur duquel sont confinés les organes de maintien et les éléments de détection. De plus, ces coquilles n'étant jamais au contact des éléments de détection, tout risque de création de pont thermique est annihilé.

Préférentiellement, chaque corps présente une paroi latérale dans laquelle sont ménagés des évidements longitudinaux adaptés pour coopérer avec lesdites coquilles, chacun de ces derniers pouvant être encadré par deux épaulements d'extrémité.

De plus, un tel dispositif de retenue comprend de préférence un serre-clips pouvant être positionné au moins partiellement autour des coquilles, chacune d'elles pouvant comporter au moins une fente dans laquelle le serre-clips peut être partiellement inséré.

Avantageusement encore, la pince ressort repose sur un support intermédiaire prenant appui sur une platine d'ancrage. Lorsque ce dispositif de retenue est installé côté inverseur de poussée, et plus particulièrement lorsque ce dernier possède une structure composite, un matelas d'isolation thermique est intercalé entre la pince ressort et le support intermédiaire. Ce matelas d'isolation thermique peut être en fait l'un de ceux qui sont traditionnellement fixés contre les faces internes des panneaux constitutifs de l'inverseur de poussée. De plus, la pince ressort est de préférence rattachée à la platine d'ancrage par l'intermédiaire d'un câble traversant le support intermédiaire.

L'invention sera mieux comprise à l'aide de la description détaillée qui est exposée ci-dessous en regard du dessin annexé dans lequel :
La figure 1 est une vue partielle d'un panneau d'un inverseur de poussée sur lequel sont fixés plusieurs dispositifs de retenue selon l'invention reliés entre eux par les éléments de détection.
La figure 2 est une vue en perspective éclatée d'un dispositif de retenue selon l'invention.
La figure 3 est une vue en coupe transversale passant par le serre-clips du dispositif de retenue représenté à la figure 2.
La figure 4 est une vue en perspective d'un autre dispositif de retenue selon le mode de réalisation préféré de l'invention, avec omission du matelas d'isolation thermique et de la platine d'ancrage.
La figure 5 est une vue en coupe transversale passant par le serre-clips du dispositif de retenue représenté à la figure 4.

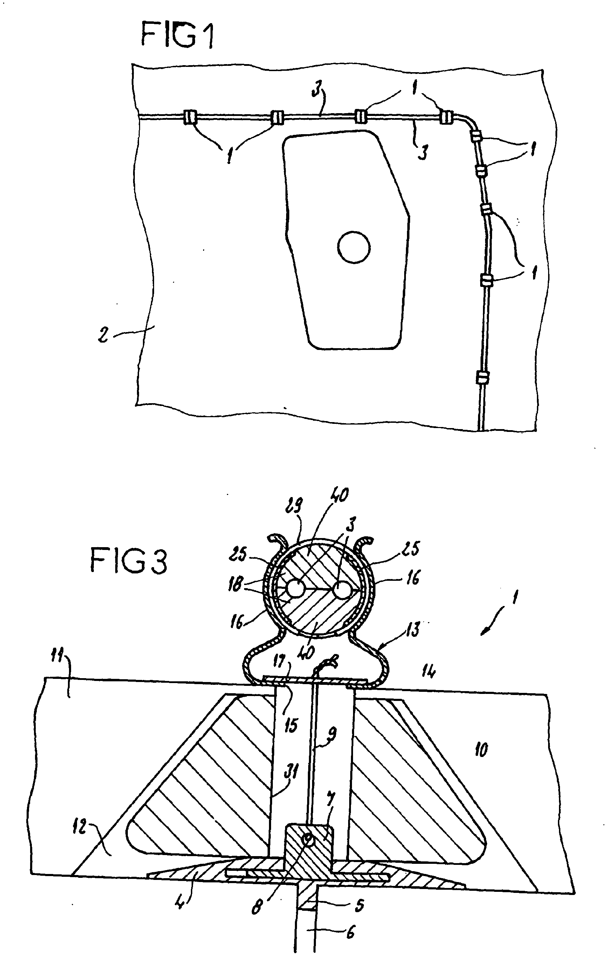

Comme représenté à la figure 1, un système de détection feu positionné côté inverseur de poussée comprend, d'une part, des dispositifs de retenue 1 espacés les uns des autres et fixés dans un panneau 2 dudit inverseur de poussée, et d'autre part, deux éléments de détection constitués chacun par un capillaire 3. Un tel panneau 2 est généralement réalisé dans un matériau composite.

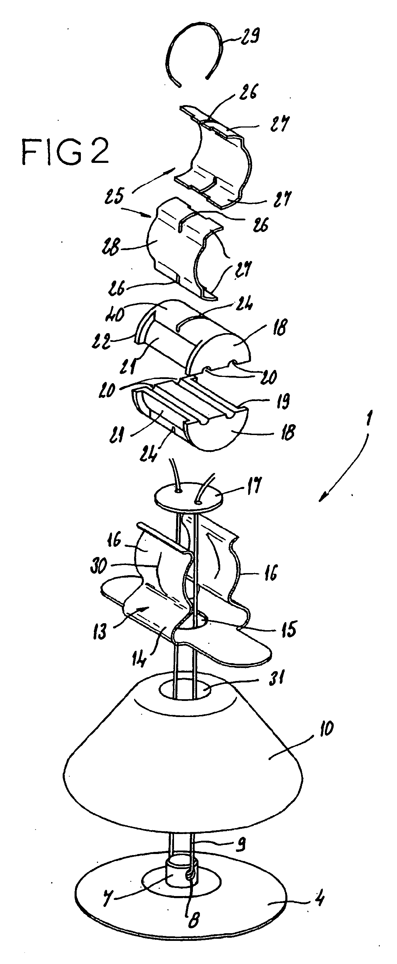

Plus précisément, un dispositif de retenue 1 selon l'invention, tel que représenté aux figures 2 et 3, est réalisé à partir d'une platine d'ancrage 4 fixée par exemple par collage contre le panneau 2 de l'inverseur de poussée. Cette platine d'ancrage 4 présente, d'une part, un plot central 7 situé face au moteur et traversé par un alésage 8, et d'autre part, un doigt de positionnement 5 dirigé dans la direction opposée à celle du plot central 7 et destiné à être inséré dans un évidement 6 creusé dans le panneau 2.

Un fil 9 métallique présentant deux extrémités libres est ensuite glissé au travers de l'alésage 8 du plot central 7 de la platine d'ancrage 4. Un support intermédiaire 10, pourvu d'un canal central 31 au travers duquel sont glissées les deux extrémités libres du fil 9, est rapporté sur ladite platine d'ancrage 4. Le support intermédiaire 10, qui est par exemple réalisé en feutre métallique compressé ou encore en silicone, a sensiblement la forme d'un cône tronqué à base circulaire. Plus précisément, ce support intermédiaire 10 est positionné de façon à ne présenter qu'une surface minimale face à la source chaude constituée par le moteur (non représenté), ce qui permet en finalité de réduire le transfert thermique de la source chaude vers la source froide constituée par le panneau 2 de l'inverseur de poussée.

Un matelas 11 d'isolation thermique est alors rapporté sur le support intermédiaire 10. Plus précisément, ce dernier est logé dans un évidement 12 du matelas 11 possédant une forme complémentaire à celle dudit support intermédiaire 10.

Une pince ressort 13, présentant une embase 14 munie d'une perforation 15 centrale et deux branches 16 latérales élastiques à section circulaire, est ensuite posée sur le matelas 11 d'isolation thermique et peut être rendue solidaire de celui-ci par exemple par soudage, par clipsage ou encore par rivetage. Une rondelle 17 pourvue de deux orifices est alors rapportée sur la perforation 15 de l'embase 14. Chacune des deux extrémités libres du fil 9 est successivement engagée dans la perforation 15 de la pince ressort 13 et dans l'un des orifices présentés par la rondelle 17, et les deux extrémités libres sont finalement torsadées de façon à ce que le matelas 11 d'isolation thermique et le support intermédiaire 10 soient comprimés contre le panneau 2 sous l'action de la rondelle 17 et de l'embase 14 de la pince ressort 13.

Par ailleurs, un tel dispositif de retenue 1 comprend un moyen de retenue réalisé à partir de deux organes de maintien 18 identiques constitué chacun sous la forme d'un corps semi-cylindrique. Chacun de ces corps 18 présente, d'une part, une face plane 19 pourvue de deux sillons 20 parallèles longitudinaux, et d'autre part, une paroi latérale de section circulaire dans laquelle sont ménagés deux évidements 21 longitudinaux opposés délimitant deux bossages 40. Ces évidements 21 présentent une section circulaire et sont chacun encadrés par deux épaulements d'extrémité 22, une rainure 24 transversale médiane étant creusée dans chacun des bossages 40.

Par conséquent, lorsque l'on souhaite rattacher les capillaires 3 au dispositif de retenue 1, on commence par insérer chaque capillaire 3 dans le sillon 20 correspondant d'un premier corps 18. Le second corps 18 est ensuite rapporté sur le premier, chaque sillon 20 du premier corps 18 étant apte à constituer un canal avec le sillon 20 correspondant du second corps 18. Les deux corps 18 ainsi réunis définissent alors un cylindre sur une partie duquel peuvent être rapportées deux coquilles 25 métalliques.

Chacune de ces coquilles 25 présente une longueur sensiblement égale à la longueur des évidements 21, comporte deux fentes 26 transversales médianes, et possède une forme générale complémentaire de celle dudit cylindre. Plus précisément, chaque coquille 25 comporte deux bords d'extrémité 27 situés de part et d'autre d'une partie centrale 28 à section circulaire prévue pour venir au contact d'une partie de la paroi latérale du cylindre constituée par deux évidements 21 accolés présentés respectivement par le premier et le second corps 18. Ces coquilles 25 peuvent alors être rendues solidaires du cylindre grâce à un serre-clips 29, rapporté sur lesdites coquilles 25, et apte à traverser les fentes 26 des coquilles 25 et au moins la rainure 24 de l'un des corps 18. Les capillaires 3 sont alors prisonniers des corps 18 et des coquilles 25, et l'ensemble ainsi constitué peut finalement être inséré en force entre les deux branches 16 de la pince ressort 13, lesdites branches 16 étant aptes à enserrer lesdites coquilles 25. Comme représenté plus particulièrement à la figure 2, chaque branche 16 comporte un léger renflement 30 dans lequel est logé le serre-clips 29. Le cylindre ainsi positionné est bloqué en translation par les deux épaulements d'extrémité 22 qui encadrent les branches 16 de la pince ressort 13.

Un tel dispositif de retenue 1 comprend donc bien un moyen de retenue réalisé à l'aide de deux organes de maintien assemblés l'un à l'autre de façon amovible, puisqu'il suffit, tout d'abord, d'écarter les deux branches 16 de la pince ressort 13, puis d'extraire le serre-clips 29, pour désolidariser les deux corps 18 l'un de l'autre.

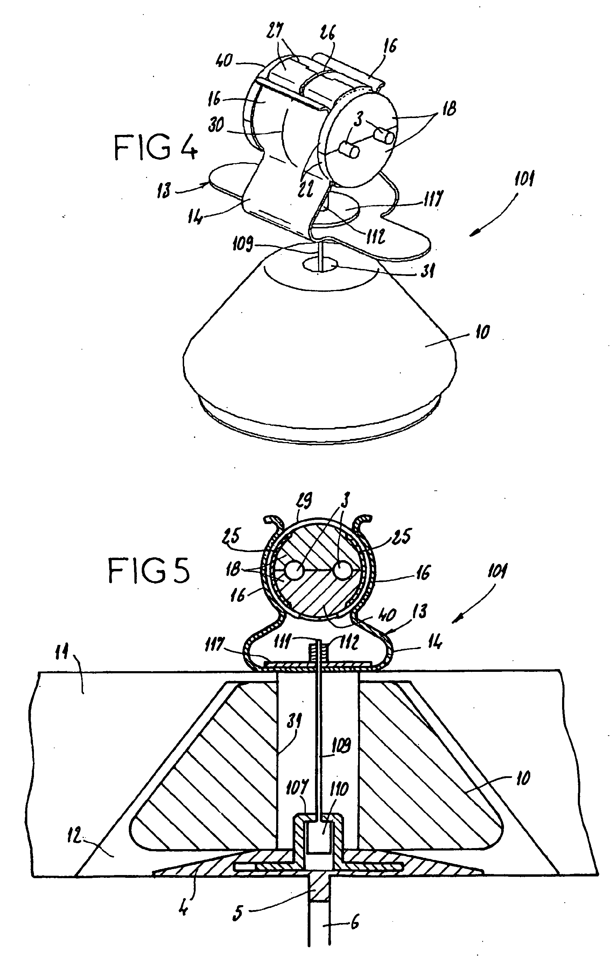

Un autre dispositif de retenue 101 selon le mode de réalisation préféré de l'invention est représenté aux figures 4 et 5. Les éléments communs aux dispositifs de retenue 1, 101 conservent les mêmes références. Cependant, dans ce dispositif de retenue 101, un câble 109 métallique se substitue au fil 9 permettant le rattachement de la pince ressort 13 à la platine d'ancrage 4. Ce câble 109 présente, d'une part, une première extrémité 110 élargie prisonnière d'un évidement réalisé dans un plot central 107 solidaire de la platine d'ancrage 4, et d'autre part, une seconde extrémité 111 glissée à travers l'unique orifice présenté par la rondelle 117. Une bague 112 est finalement fixée par sertissage dans ladite seconde extrémité 111, cette bague 112 possédant une section supérieure à la section de passage de l'orifice de la rondelle 117.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention tel que défini par le texte des revendications qui suivent.

## Revendications

1. Dispositif de retenue (1, 101) prévu pour être installé entre un moteur d'aéronef et un inverseur de poussée associé afin de supporter au moins un élément, de détection feu réalisé sous la forme d'un capillaire (3), ce dispositif comprenant au moins deux organes de maintien semi-cylindriques (18) pouvant être assemblés l'un à l'autre de façon amovible, présentant chacun une face plane (19) pourvue d'au moins un sillon (20) longitudinal dans lequel peut être inséré ledit capillaire (3) de détection feu,
ce dispositif étant **caractérisé en ce qu'**il comprend au moins deux coquilles (25) métalliques pouvant être disposées autour desdits organes de maintien (18), et une pince ressort (13) dans laquelle les organes de maintien (18) entourés de leurs coquilles métalliques (25) peuvent peut être engagés.

2. Dispositif de retenue (1, 101) selon la revendication 1, **caractérisé en ce que** chaque organe de maintien (18) présente une paroi latérale dans laquelle sont ménagés des évidements (21) longitudinaux adaptés pour coopérer avec lesdites coquilles (25).

3. Dispositif de retenue (1, 101) selon la revendication 2, **caractérisé en ce que** chaque évidement (21) longitudinal est encadré par deux épaulements d'extrémité (22).

4. Dispositif de retenue (1, 101) selon l'une quelconque des revendications précédentes, **caractérisé en ce qu'**il comprend un serre-clips (29) pouvant être positionné au moins partiellement autour des coquilles (25).

5. Dispositif de retenue (1, 101) selon la revendication 4, **caractérisé en ce que** chaque coquille (25) comporte au moins une fente (26) dans laquelle le serre-clips (29) peut être partiellement inséré.

6. Dispositif de retenue (1, 101) selon l'une quelconque des revendications précédentes, **caractérisé en ce que** la pince ressort (13) repose sur un support intermédiaire (10) prenant appui sur une platine d'ancrage (4).

7. Dispositif de retenue (101) selon la revendication 6, **caractérisé en ce que** la pince ressort (13) est rattachée à la platine d'ancrage (4) par l'intermédiaire d'un câble (109) traversant le support intermédiaire (10).

## Claims

1. Support device (1, 101) designed to be installed between an aircraft engine and an associated thrust reverser so as to support at least one fire-detection component produced in the form of a capillary (3), this device comprising at least two half-cylindrical holding members (18) capable of being assembled to each other detachably, each having a flat face (19) provided with at least one longitudinal furrow (20) in which said fire-detection capillary (3) can be placed, **characterized in that** it comprises at least two metal shells (25) that can be arranged around said holding members (18), and a spring clip (13) in which the holding members (18), surrounded by their metal shells (25), can be engaged.

2. Support device (1, 101) according to Claim 1, **characterized in that** each holding member (18) has a side wall in which longitudinal recesses (21) suitable for engagement with said shells are formed (25).

3. Support device (1, 101) according to Claim 2, **characterized in that** each longitudinal recess (21) is enclosed by two end shoulders (22).

4. Support device (1, 101) according to any one of the preceding claims, **characterized in that** it comprises a clip holder (29) capable of being positioned at least partially around the shells (25).

5. Support device (1, 101) according to Claim 4, **characterized in that** each shell (25) comprises at least one slot (26) into which the clip holder (29) can be partially inserted.

6. Support device (1, 101) according to any one of the preceding claims, **characterized in that** the spring clip (13) rests on an intermediate mount (10) that bears on an anchor plate (4).

7. Support device (101) according to Claim 6, **characterized in that** the spring clip (13) is attached to the anchor plate (4) by a cable (109) passing through the intermediate mount (10).

## Patentansprüche

1. Rückhaltevorrichtung (1, 101), die vorgesehen ist, um zwischen einem Luftfahrzeugmotor und einem zugeordneten Schubumkehrer eingebaut zu werden, um mindestens ein Brandentdeckungselement zu tragen, das in Form eines Kapillarrohrs (3) hergestellt ist, wobei diese Vorrichtung mindestens zwei halbzylindrische Halteorgane (18) aufweist, die lösbar zusammengebaut werden können und je eine flache Seite (19) aufweisen, die mit mindestens einer Längsrille (20) versehen ist, in die das Brandentdeckungs-Kapillarrohr (3) eingefügt werden kann,
wobei diese Vorrichtung **dadurch gekennzeichnet ist, dass** sie mindestens zwei metallische Schalen (25), die um die Halteorgane (18) herum angeordnet werden können, und eine Federklemme (13) aufweist, in die die von ihrem metallischen Schalen (25) umgebenen Halteorgane (18) eingefügt werden können.

2. Rückhaltevorrichtung (1, 101) nach Anspruch 1, **dadurch gekennzeichnet, dass** jedes Halteorgan (18) eine Seitenwand aufweist, in der Längsaussparungen (21) ausgebildet sind, die geeignet sind, um mit den Schalen (25) zusammenzuwirken.

3. Rückhaltevorrichtung (1, 101) nach Anspruch 2, **dadurch gekennzeichnet, dass** jede Längsaussparung (21) von zwei Endschultern (22) umrahmt wird.

4. Rückhaltevorrichtung (1, 101) nach einem der vorhergehenden Ansprüche, **dadurch gekennzeichnet, dass** sie einen Klemmring (29) aufweist, der zumindest teilweise um die Schalen (25) herum positioniert werden kann.

5. Rückhaltevorrichtung (1, 101) nach Anspruch 4, **dadurch gekennzeichnet, dass** jede Schale (25) mindestens einen Schlitz (26) aufweist, in den der Klemmring (29) teilweise eingefügt werden kann.

6. Rückhaltevorrichtung (1, 101) nach einem der vorhergehenden Ansprüche, **dadurch gekennzeichnet, dass** die Federklemme (13) auf einem Zwischenträger (10) ruht, der auf einer Verankerungsplatte (4) aufliegt.

7. Rückhaltevorrichtung (101) nach Anspruch 6, **dadurch gekennzeichnet, dass** die Federklemme (13) an der Verankerungsplatte (4) über ein Kabel (109) befestigt ist, das den Zwischenträger (10) durchquert.
